# EUROPEAN PATENT SPECIFICATION

(11) **EP 3 147 754 B1**
(45) Date of publication and mention of the grant of the patent: **29.12.2021**
(21) Application number: 16168314.9
(22) Date of filing: 04.05.2016
(51) Int. Cl.: G06F 3/01, G06F 1/16, G06F 3/044

(54) **SENSOR INTEGRATED HAPTIC DEVICE AND METHOD FOR MANUFACTURING THE SAME**
SENSORINTEGRIERTE HAPTISCHE VORRICHTUNG UND VERFAHREN ZUR HERSTELLUNG DAVON
DISPOSITIF HAPTIQUE INTÉGRÉ DE CAPTEUR ET SON PROCÉDÉ DE FABRICATION

(30) Priority: 23.09.2015 KR 20150134568
(43) Date of publication of application: 29.03.2017
(73) Proprietor: Soongsil University Research Consortium Techno-Park, Seoul 06978 (KR)
(72) Inventor: LEE, Hojin, 06207 Seoul (KR); KIM, Do Hwan, 14049 Gyeonggi-do (KR); HEO, Eun Ah, 21004 Incheon (KR); PARK, Sang Sik, 08726 Seoul (KR)
(74) Representative: Manitz Finsterwald Patent- und Rechtsanwaltspartnerschaft mbB

(56) References cited:
- EP-A2- 1 403 214
- US-A1- 2006 081 071
- US-A1- 2014 139 329
- US-A1- 2015 061 703
- US-A1- 2015 212 109

## Description

### BACKGROUND

The present disclosure relates to an ionic elastomer-based sensor integrated haptic device and a method for manufacturing the same.

Recently, according to the needs of users wanting to easily use electronic devices, touch input type devices have been generalized. Among the touch input type devices, a haptic feedback device provides feedback of a touch and thus provides a more intuitive experience to a user. Such a haptic feedback device facilitates space saving, convenience in manipulation, easy recognition by a user, and interworking with IT devices.

There has been known a method of using a piezoelectric element as a material for implementing the haptic feedback device. As piezoelectric materials constituting the piezoelectric element, piezoelectric ceramic and a piezoelectric film have been known. Generally, piezoelectric ceramic has a high stiffness and thus has been used as an actuator, and a piezoelectric film has high sensitivity and flexibility and thus has been used as a sensor. However, the piezoelectric materials cannot provide adequate force and displacement in a low frequency range, and the piezoelectric materials in a single unit provide very small force and displacement. Therefore, it is difficult to use the piezoelectric materials as an actuator.

In this regard, there have been disclosed techniques such as Korean Patent Laid-open Publication No. 2011-0077637 (entitled "Piezoelectric actuator actuating haptic device"). US 2015/0061703 A1 discloses a system, wherein the same electrochemical polymer sensor may be used as either an electrochemical polymer sensor or an electrochemical polymer actuator by selectively connecting the electrochemical sensor to a sensing circuit or an actuation circuit by means of a switching circuit. According to another embodiment, an electrochemical polymer sensor may be provided in close proximity to an electrochemical polymer actuator, where the electrochemical polymer sensor may be formed on top or underneath the electrochemical polymer actuator.

EP 1 403 214 A2 describes a manufacturing method for flexible MEMS transducers. A multimodal haptic system comprising electromechanical polymer sensors and actuators is shown in US 2014/0139329 A1. US 2015/0212109 A1 teaches a MEMS sensor including a flexible substrate, a vibrator and a sensor. US 2006/0081071 A1 teaches a damage detecting device comprising at least one piezoelectric wafer including a sensor and an actuator in-plane with the sensor.

Conventionally, various devices have been used in order to implement various sensors such as a touch sensor, a pressure sensor, and a temperature sensor and actuators capable of providing feedback of tactile sensation. Accordingly, there is an increase in cost due to a complicated process and there is also a limit to durability of the haptic feedback device. Such demerits affect the process cost and yield when a touch sensor is integrated with a display panel or a cover glass in order to minimize a display. Further, even when a sensor and an actuator are configured as separate layers in order to implement various functions, the process cost may be increased and a thickness of a display panel may be gradually increased.

### BRIEF SUMMARY

An object of the invention is to provide a cost-efficient and easy to produce haptic device. This object is satisfied by a sensor integrated haptic device in accordance with claim 1 and the corresponding manufacturing method in accordance with claim 9.

However, problems to be solved by the present disclosure are not limited to the above-described problems. There may be other problems to be solved by the present disclosure.

The sensor integrated haptic device may be used in an electronic device. The electronic device may include: multiple sensor integrated haptic devices.

A sensor integrated haptic device can sense an external environment and provide mechanical feedback at the same time, and can also be easily manufactured in the form of an array. Therefore, the sensor integrated haptic device can be conveniently applied to various application fields such as a touch panel of a display.

### BRIEF DESCRIPTION OF THE DRAWINGS

In the detailed description that follows, embodiments are described as illustrations only since various changes and modifications will become apparent to those skilled in the art from the following detailed description. The use of the same reference numbers in different figures indicates similar or identical items.
FIG. 1A is a schematic diagram of a sensor integrated haptic device in accordance with an exemplary embodiment of the present disclosure.
FIG. 1B is a cross-sectional view of the sensor integrated haptic device in accordance with the exemplary embodiment of the present disclosure.
FIG. 2 is a schematic diagram of a sensor integrated haptic device in accordance with another exemplary embodiment of the present disclosure.
FIG. 3 is a diagram provided to explain an actuating principle of actuator in a sensor integrated haptic device in accordance with an exemplary embodiment of the present disclosure.
FIG. 4 is a diagram provided to explain a method for manufacturing a sensor integrated haptic device in accordance with an exemplary embodiment of the present disclosure.
FIG. 5 is a flowchart provided to explain a method for manufacturing a sensor integrated haptic device in accordance with an exemplary embodiment of the present disclosure.
FIG. 6 illustrates an array structure of a sensor integrated haptic device in accordance with an exemplary embodiment of the present disclosure.
FIG. 7 illustrates an array structure of a sensor integrated haptic device in accordance with another exemplary embodiment of the present disclosure.

### DETAILED DESCRIPTION

Hereinafter, embodiments of the present disclosure will be described in detail with reference to the accompanying drawings so that the present disclosure may be readily implemented by those skilled in the art. However, it is to be noted that the present disclosure is not limited to the embodiments but can be embodied in various other ways. In drawings, parts irrelevant to the description are omitted for the simplicity of explanation, and like reference numerals denote like parts through the whole document.

Through the whole document, the term "connected to" or "coupled to" that is used to designate a connection or coupling of one element to another element includes both a case that an element is "directly connected or coupled to" another element and a case that an element is "electronically connected or coupled to" another element via still another element. Further, the term "comprises or includes" and/or "comprising or including" used in the document means that one or more other components, steps, operation and/or existence or addition of elements are not excluded in addition to the described components, steps, operation and/or elements unless context dictates otherwise.

Hereinafter, a sensor integrated haptic device in accordance with exemplary embodiments of the present disclosure will be described with reference to the accompanying drawings.

A haptic actuator to be described hereinafter is configured to provide vibration or physical displacement in order to enable a user to feel the vibration or bump through tactile sensation. The haptic actuator includes an ionic elastomer layer having elasticity.

Further, a sensor includes an ionic elastomer layer between electrodes, and is configured to detect a change of a capacitance formed between the electrodes in response to an external pressure.

Furthermore, integration of the sensor with the actuator may mean structural or functional integration, but may not be limited thereto.

A haptic device in accordance with an exemplary embodiment of the present disclosure is implemented with a sensor and an actuator in a single cell by arranging two upper and lower metal layers used as electrodes and an ionic elastomer layer between the two metal layers. Herein, the ionic elastomer layer is an electroactive polymer which is contracted and expanded due to migration and diffusion of ions when an external voltage is applied. Further, the ionic elastomer layer is lightweight and flexible, and has a high response speed and is greatly transformed even at a low voltage. Therefore, if a voltage is applied to both the electrodes of the haptic device, bending deformation occurs. On the contrary, if the haptic device is mechanically transformed under that the external voltage is applied in mV range, a capacitance difference is generated between both the electrodes, and, thus, it can be used as a sensor.

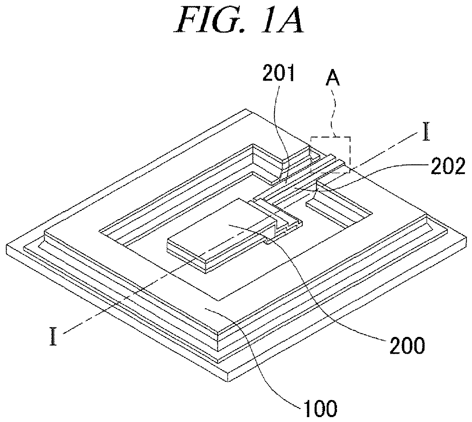

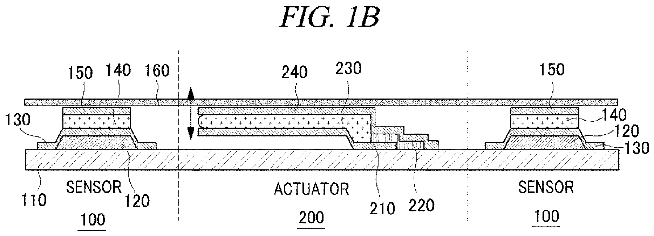

FIG. 1A is a configuration view of a sensor integrated haptic device in accordance with an exemplary embodiment of the present disclosure, and FIG. 1B is a diagram illustrating a cross section of the sensor integrated haptic device taken along a line I-I of FIG. 1A.

Referring to FIG. 1A, the sensor integrated haptic device includes a sensor 100 and an actuator 200. Herein, the sensor 100 is configured to surround the actuator 200 in order to protect the actuator from an external pressure such as a touch of a user and secure the reliability.

Further, the sensor integrated haptic device further includes a first line 201 connected to an upper electrode of the actuator 200 and a second line 202 connected to a lower electrode of the actuator 200. Herein, the sensor 100 may include an outlet A that enables the first line and the second line to be withdrawn to the outside of the sensor 100.

Herein, a layer of the sensor 100 and a layer of the actuator 200 are formed together to be arranged on the same plane. Therefore, as illustrated in FIG. 1B, the sensor 100 and the actuator 200 are formed on a same substrate 110.

The substrate 110 may be formed of any one of glass, ceramic, silicon, and plastic, but may not be limited thereto. Desirably, the substrate 110 may be formed of a material which is not affected by a thin film deposition process or etching process performed while the sensor 100 and the actuator 200 are formed on an upper surface of the substrate 110.

The sensor integrated haptic device may further include an anti-contamination film 160 on upper surfaces of the sensor 100 and actuator 200. Herein, the anti-contamination film 160 may include a thin and flexible polymer film.

A structure of the sensor integrated haptic device will be described in more detail with reference to FIG. 1B.

As illustrated in FIG. 1B, the sensor 100 and the actuator 200 include lower electrodes 130 and 210 formed through a first process, ionic elastomer layers 140 and 230 formed on the lower electrodes 130 and 210 through a second process, and upper electrodes 150 and 240 formed on the ionic elastomer layers 140 and 230 through a third process, respectively.

Although the respective manufacturing processes of the lower electrodes 130 and 210, ionic elastomer layers 140 and 230 and upper electrodes 150 and 240 respectively included in the sensor 100 and the actuator 200 are separately described above for convenience in explanation, they are manufactured in the same process. By way of example, the lower electrode 130 of the sensor 100 and the lower electrode 210 of the actuator 200 are manufactured in the same process using the same material.

The sensor 100 may sense various physical quantities such as pressure, temperature, pressure to tactile and humidity or changes thereof. Herein, a structure of the sensor 100 may be formed into various shapes, for example, a polygon, such as a square, hexagon and an octagon, and a circle. That is, a shape of the sensor 100 can be freely modified depending on a device and is not limited in size and shape.

The sensor 100 further includes a sacrificial layer 120. The sacrificial layer 120 may be formed to adjust a height of the sensor 100 to correspond to a height of the actuator 200. In other words, a height of the sensor 100 can be adjusted by adjusting a height of the sacrificial layer 120. Herein, the lower electrode 130 may be formed to surround the sacrificial layer 120.

Further, the sensor integrated haptic device may further include a control unit (not illustrated) configured to detect a capacitance formed between the lower electrode 130 and the upper electrode 150 of the sensor 100 and sense an external pressure according to a variation of the detected capacitance.

In the sensor 100 of the sensor integrated haptic device, when a pressure is applied from the outside, the ionic elastomer layer 140 is transformed and a gap between the electrodes is changed, which results in a change of a capacitance formed between the lower electrode 130 and the upper electrode 150 of the sensor 100.

The actuator 200 is a converter configured to receive a signal and output mechanical power. The actuator 200 can be manufactured through a general MEMS process. The actuator 200 has a cantilever shape supported by one self-supporting post anchored on the substrate 110 or bridge shape supported by two self-supporting posts anchored on the substrate 110.

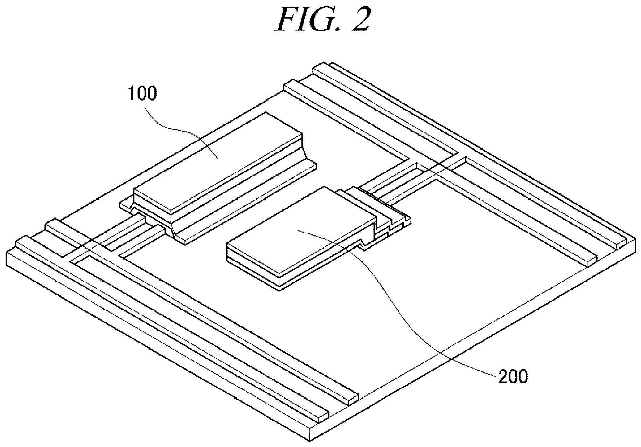

Another example of the sensor integrated haptic device is shown in FIG. 2.

FIG. 2 is a schematic diagram of a sensor integrated haptic device in accordance with another exemplary embodiment of the present disclosure.

As illustrated in FIG. 2, in the sensor integrated haptic device in accordance with another exemplary embodiment of the present disclosure, the sensor 100 and the actuator 200 may be formed to be arranged in parallel with each other. That is, the sensor 100 does not surround the entire actuator 200, but is arranged on one side of the actuator 200. The sensor integrated haptic device according to another exemplary embodiment may be very similar or identical to the sensor integrated haptic device according to an exemplary embodiment of the present disclosure in properties, structures, and manufacturing processes of the respective components except a difference in arrangement of the sensor 100 and the actuator 200 of the sensor integrated haptic device.

Referring to FIG. 1B again, the actuator 200 may be formed of any one of electroactive ceramic (EAC), a shape memory alloy (SMA), an electroactive polymer (EAP), an ionic polymer metal composite (IPMC), and a dielectric polymer.

To be specific, the actuator 200 includes the lower electrode 210, an insulation layer 220 in contact with a predetermined region of the lower electrode 210, the ionic elastomer layer 230 in contact with the insulation layer 220 and formed on an upper surface of the lower electrode 210, and the upper electrode 240 formed on upper surfaces of the ionic elastomer layer 230 and insulation layer 220.

Herein, the predetermined region of the lower electrode 210 may be arranged to be apart from the substrate as much as a thickness of the sacrificial layer 120 by the sacrificial layer 120 formed during a manufacturing process of the sensor integrated haptic device. Then, the lower electrode 210, the insulation layer 230, and the upper electrode 240 are formed in sequence on the sacrificial layer 120. Then, the sacrificial layer 120 is removed by selective etching. Accordingly, as illustrated in FIG. 1B, the actuator 200 in accordance with an exemplary embodiment of the present disclosure may be implemented into a cantilever structure.

That is, in the sensor 100, the sacrificial layer 120 has a function of adjusting a height of the sensor 100 to correspond to a height of the actuator 200. Further, in the actuator 200, the sacrificial layer 120 is formed and then removed in order to form a cantilever structure. As a result, the actuator 200 has a cantilever or bridge shape that are respectively supported by one or two self-supporting posts anchored on the substrate 110.

The insulation layer 220 is formed on the lower electrode 210. Herein, the insulation layer 220 has a function of separating the lower electrode 210 and the upper electrode 240 in order to form a potential difference between the lower electrode 210 formed under the insulation layer 220 and the upper electrode 240 formed on the insulation layer 220.

Referring to FIG. 1A and FIG. 1B, the sensor integrated haptic sensor in accordance with an exemplary embodiment of the present disclosure may further include the first line 201 connected to the upper electrode 240 of the actuator 200, the second line 202 connected to the lower electrode 210 of the actuator 200, and the outlet A that enables the first line 201 and the second line 202 to be withdrawn to the outside of the sensor 100. As such, a layer of the sensor 100 and a layer of the actuator 200 are formed together to be arranged on the same plane. That is, the sensor 100 and the actuator 200 are formed on the same substrate 110.

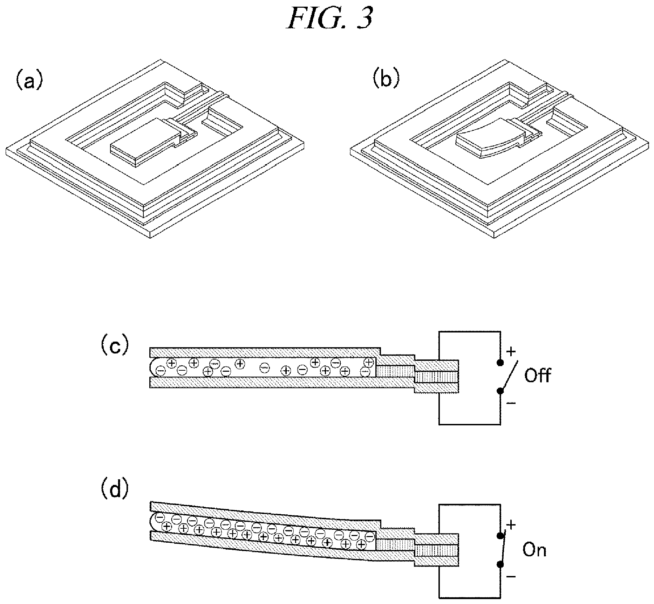

FIG. 3 is a diagram provided to explain an actuating principle of actuator in a sensor integrated haptic device in accordance with an exemplary embodiment of the present disclosure.

Herein, illustrations (a) and (c) of FIG. 3 illustrate an off state in which electricity is off, and illustrations (b) and (d) of FIG. 3 illustrate an on state in which electricity is on.

Referring to illustrations (a) and (c) of FIG. 3, if a voltage is not applied, cations and anions are present within the ionic elastomer layer 230 of the actuator 200. Further, since one side of the actuator 200 is fixed to the substrate, the actuator 200 is not changed in shape.

Meanwhile, referring to illustrations (b) and (d) of FIG. 3, if a voltage is applied, the cations and anions present within the ionic elastomer layer 230 of the actuator 200 migrate toward a negatively or positively charged electrode. Accordingly, the ions within the ionic elastomer layer 230 are separated from each other at an interface between the electrode and the electrodes and thus form an electrical double layer. Therefore, the actuator 200 is bent in a migration direction of electrons.

That is, since the cations and anions present within the ionic elastomer layer 230 migrate toward a negatively or positively charged electrode, the total volume of cations and anions in the lower electrode 210 and the upper electrode 240 is changed. Therefore, a negatively charged electrode layer is expanded and a positively charged electrode layer is contracted, and, thus, bending deformation of the actuator 200 occurs.

Herein, the actuator 200 is greatly bent in response to an electrical stimulus of several volts (V), and causes a change of a capacitance in response to an electrical stimulus of several mV or mechanical deformation (or vibration). Such a phenomenon is caused by a change of a charge amount of the electrical double layer when surplus ions migrate to a surface of the electrode due to bending deformation, such as expansion or contraction, of the ionic elastomer layer 230.

As described above, the sensor 100 and the actuator 200 can be manufactured in a single cell at the same time through a series of processes and can also be manufactured to have a large area. Herein, the actuator 200 in accordance with an exemplary embodiment of the present disclosure can be used by interworking with the sensor 100. Further, the actuator 200 can provide feedback of a realistic tactile impression to a user upon a touch by the user, and can also provide various tactile impressions depending on a voltage (ex. amplitude and frequency of the applied voltage).

By way of example, if the sensor 100 senses a touch by the user, the actuator 200 is activated to provide feedback of the touch. Further, if the number of times and an interval of a pulse voltage input to the actuator 200 are controlled, haptic sensations various in intensity and interval of a tactile impression can be provided to the user. Herein, the number of times and the interval of the pulse may be implemented by analog and digital logic circuits.

In an application example of a tactile display based on the actuator 200 in accordance with the exemplary embodiments of the present disclosure, feedback may be provided at the time of a key click or scrolling on a virtual keyboard. Further, at the time of execution of multimedia or a game, a collision or explosion effect or rhythm of music may be provided. Furthermore, material properties of an object surface such as a surface roughness, a micro pattern, warmth, and a frictional force can be provided. Thus, it is possible to provide various user experiences.

Meanwhile, in the sensor integrated haptic device in accordance with an exemplary embodiment of the present disclosure, if a pressure is applied from the outside, the ionic elastomer layer 140 of the sensor 100 is physically deformed, and, thus, a capacitance value of the sensor 100 is changed accordingly. Therefore, it is possible to detect a change of an external pressure by measuring a change of the capacitance value.

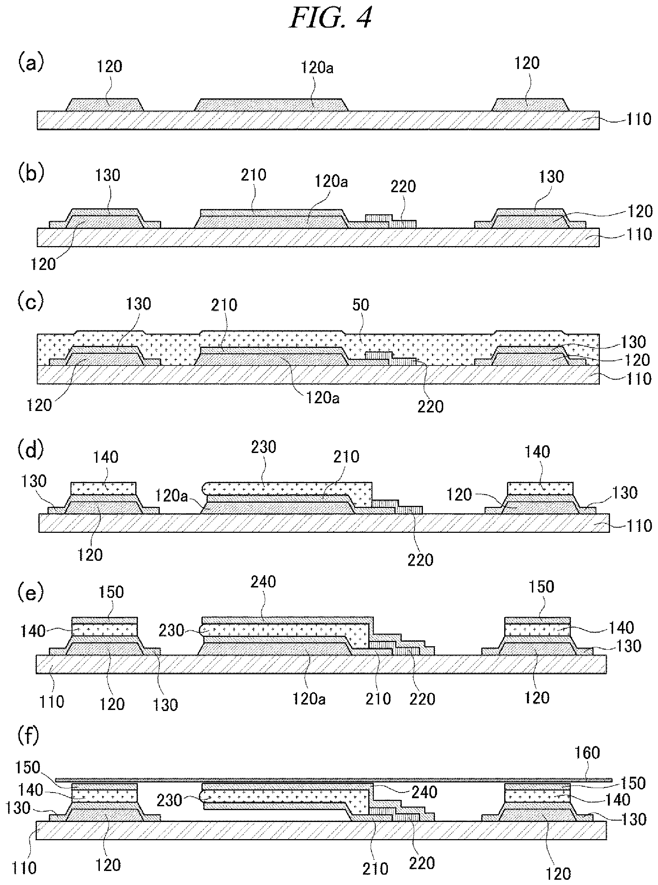

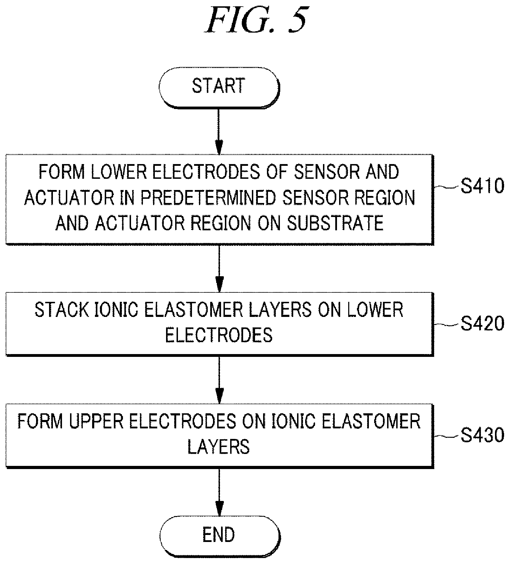

Hereinafter, a method for manufacturing a sensor integrated haptic device in accordance with an exemplary embodiment of the present disclosure will be described in detail with reference to FIG. 4 and FIG. 5.

FIG. 4 is a conceptual diagram illustrating a method for manufacturing a sensor integrated haptic device in accordance with an exemplary embodiment of the present disclosure, and FIG. 5 is a flowchart illustrating a method for manufacturing a sensor integrated haptic device in accordance with another exemplary embodiment of the present disclosure.

The sensor integrated haptic device in accordance with an exemplary embodiment of the present disclosure has merits in that the sensor 100 and the actuator 200 can be driven in a single device and the respective processes for manufacturing the sensor 100 and the actuator 200 can be performed at the same time.

Referring to FIG. 5, the method for manufacturing a sensor integrated haptic device in accordance with another exemplary embodiment of the present disclosure includes the following processes.

The method for manufacturing a sensor integrated haptic device includes: forming the lower electrodes 130 and 210 of the sensor 100 and the actuator 200 in a predetermined region for the sensor 100 and a predetermined region for the actuator 200 on the substrate 110 (S410); stacking the ionic elastomer layers 140 and 230 on the lower electrodes 130 and 210 (S420); and forming the upper electrodes 150 and 240 on the ionic elastomer layers 140 and 230 (S430). Herein, the region for the sensor 100 is arranged to surround the circumference of the region for the actuator 200.

FIG. 4 more specifically illustrates the processes for forming the respective layers illustrated in FIG. 5.

As shown in illustration (a) of FIG. 4, sacrificial layers 120 and 120a are formed on the substrate 110.

The sacrificial layers 120 and 120a are formed in a region for the sensor 100 and a region for the actuator 200, respectively. Herein, the sacrificial layer 120a formed in the region for the actuator 200 is removed after the process for forming the upper electrode 240. When the sacrificial layers 120 and 120a are formed, a photolithography process generally performed for forming a pattern in a semiconductor process may be used. By way of example, in order to form the sacrificial layers 120 and 120a into a desired shape, a specific portion is exposed using a mask and a pattern is developed. Then, a dry or wet etching process is performed to form the sacrificial layers 120 and 120a.

Then, as shown in illustration (b) of FIG. 4, the lower electrodes 130 and 210 are formed on the sacrificial layers 120 and 120a, respectively.

Herein, the lower electrode 130 positioned in the region for the sensor 100 is formed to cover the sacrificial layer 120 in order for the sacrificial layer 120 not to be exposed to the outside. On the other hand, the lower electrode 210 positioned in the region for the actuator 200 is formed in order for one surface of the sacrificial layer 120 to be exposed to the outside. This is not to remove the sacrificial layer 120 positioned in the region for the sensor 100 when the sacrificial layer 120a positioned in the region for the actuator 200 is removed later by etching.

That is, when the lower electrode 210 in the region for the actuator 200 is formed on the sacrificial layer 120a, one surface of the sacrificial layer 120a is exposed to the outside and one surface of the actuator 200 is fixed to the substrate. Therefore, the lower electrode 210 in the region for the actuator 200 is formed on the sacrificial layer 120a and the substrate close to a non-exposed surface of the sacrificial layer 120a, and the lower electrode 210 formed on the sacrificial layer 120a is connected to the lower electrode 210 formed on the substrate. Then, the sacrificial layer 120a in the region for the actuator 200 is removed, so that the actuator 200 having a cantilever shape is formed.

The above-described processes illustrated in illustrations (a) and (b) of FIG. 4 correspond to the process S410 of FIG. 5. For reference, the process S410 for forming the lower electrodes may further include a process for forming an electrode contact integrated with the lower electrode 210 of the actuator 200 in order to apply a voltage to the actuator 200.

The method for manufacturing the lower electrodes 130 and 210 may use the above-described photolithography process after a material for forming the lower electrodes 130 and 210 is deposited by any one of thermal evaporation, e-beam evaporation, and sputtering, but may not be limited thereto. By way of example, the material for forming the lower electrodes 130 and 210 may be printed or may be formed by spray coating, vacuum filtration, and electric radiation depending on the conditions. Herein, the material for forming the lower electrodes 130 and 210 may be an electrode material selected from metal, conductive metal oxide, conductive polymer, conductive carbon, conductive nanoparticles, and nanoparticles inserted between organic substances or conductive substances.

Then, as shown in illustration (b) of FIG. 4, the insulation layer 220 is formed in one region of the lower electrode 210. Herein, the lower electrode 210, on which the insulation layer 220 is formed, is formed on the substrate 110 close to the non-exposed surface of the sacrificial layer 120a.

Then, as shown in illustration (c) of FIG. 4, the ionic elastomer layers 140 and 230 are stacked on upper surfaces of the lower electrodes 130 and 210 and insulation layer 220. Then, as shown in illustration (d) of FIG. 4, except an ionic elastomer for forming the ionic elastomer layers 140 and 230 on the region for the sensor 100 and the region for the actuator 200, an ionic elastomer formed on the other regions is removed.

The above-described processes illustrated in illustrations (c) and (d) of FIG. 4 correspond to the process S420 of FIG. 5. Hereinafter, these processes will be described in more detail.

Firstly, as shown in illustration (c) of FIG. 4, an ionic elastomer 50 for forming the ionic elastomer layers 140 and 230 is formed on the substrate 110 on which the lower electrodes 130 and 210 and the insulation layer 220 are formed.

The ionic elastomer 50 for forming the ionic elastomer layers 140 and 230 may be a mixture of an ionic liquid and a polymer. Herein, the ionic liquid is a salt present in the form of a liquid at room temperature and composed of ions only. Therefore, the ionic liquid has a high conductivity of about 10 mS/cm, a wide potential window of 4 V or more, and a very low volatility. The viscosity of the ionic liquid is similar to that of water. Further, the polymer may be, for example, polyurethane (TPU). The polyurethane (TPU) is transparent and elastic and easily blended with the ionic liquid, and also has a high ionic conductivity. Therefore, the ionic elastomer layers 140 and 230 formed of the ionic liquid and the polymer have high ionic conductivity and elasticity.

Then, as shown in illustration (d) of FIG. 4, except the ionic elastomer 50 to be formed as the ionic elastomer layers 140 and 230 on the region for the sensor 100 and the region for the actuator 200, the ionic elastomer 50 formed on the other regions is removed.

Accordingly, the ionic elastomer layers 140 and 230 are separately formed to perform their functions in the sensor 100 and the actuator 200, respectively. Herein, as a process for separating the ionic elastomer layers 140 and 230, a photolithography process, such as a dry or wet etching process, performed in a semiconductor process may be employed. The process for separating the ionic elastomer layers 140 and 230 is not limited to the above-described method, and a molding method or the like may be employed.

Then, as shown in illustration (e) of FIG. 4, the upper electrodes 150 and 240 are formed on the ionic elastomer layers 140 and 230. A method for forming the upper electrodes 150 and 240 may be the same as the above-described method for forming the lower electrodes 130 and 210. Further, after the upper electrodes 150 and 240 are formed, the sacrificial layer 120a formed in the region for the actuator 200 is removed, so that the device may be completely manufactured.

The process illustrated in illustration (e) of FIG. 4 corresponds to the process S430 of FIG. 5.

For reference, the process S430 for forming the upper electrodes 150 and 240 may further include a process for forming an electrode contact integrated with the upper electrode 240 of the actuator 200.

Meanwhile, after the sensor 100 and the actuator 200 are formed through the above-described processes, a process for forming the anti-contamination film 160 for protecting the sensor 100 and the actuator 200 from external contaminants may be further performed as shown in illustration (f) of FIG. 4.

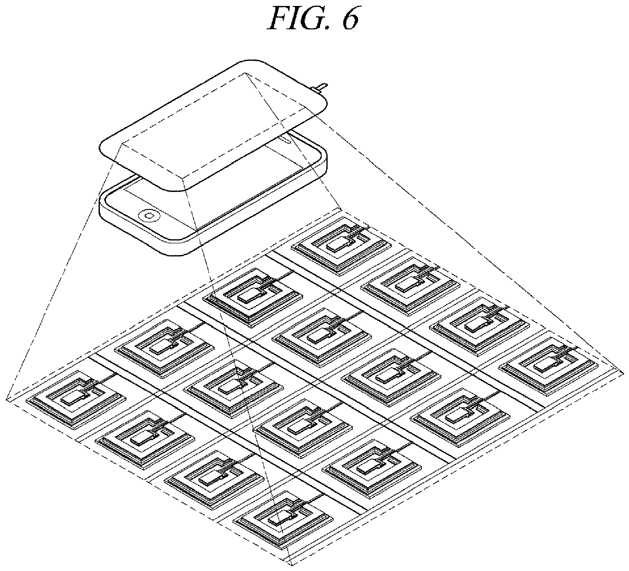

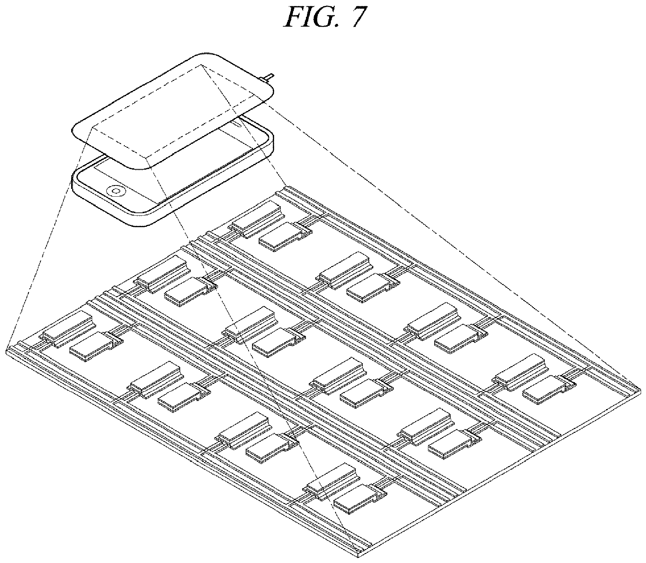

Hereinafter, an electronic device (i.e., a sensor integrated haptic device having an array structure) implemented by arranging multiple sensor integrated haptic devices according to the exemplary embodiments of the present disclosure will be described in detail with reference to FIG. 6 and FIG. 7.

FIG. 6 is a diagram illustrating an array structure of a sensor integrated haptic device in accordance with an exemplary embodiment of the present disclosure, and FIG. 7 is a diagram illustrating an array structure of a sensor integrated haptic device in accordance with another exemplary embodiment of the present disclosure.

In each of the electronic devices in which multiple sensor integrated haptic devices are arranged in an array structure as illustrated in FIG. 6 and FIG. 7, the sensor integrated haptic devices illustrated in FIG. 1 to FIG. 5 are arranged. The electronic device may sense a multi-touch by a user and provide a tactile impression.

To be specific, each of the sensor integrated haptic devices included in the electronic device includes the sensor 100 and the actuator 200 formed to be arranged on the same plane as the sensor 100. Herein, the sensor 100 and the actuator 200 include the lower electrodes 130 and 210 formed through the first process, the ionic elastomer layers 140 and 230 formed on the lower electrodes 130 and 210 through the second process, and the upper electrodes 150 and 240 formed on the ionic elastomer layers 140 and 230 through the third process, respectively. Further, the electronic device includes a power supply line configured to supply power to each actuator 200 and a transmission line configured to transmit a sensing voltage to each sensor 100.

For reference, the multiple sensor integrated haptic devices included in the electronic device may include a passive element and an active element which may be used in a thin film transistor. Herein, the passive element may be manufactured by forming a thin film on a substrate having a good insulating property by deposition or sputtering. By way of example, if a flexible device is used as a substrate in a thin film transistor, the thin film transistor includes a gate electrode, a semiconductor layer, a source electrode, and a drain electrode formed on the flexible device.

Further, if the multiple sensor integrated haptic devices are arranged in an array structure as shown in FIG. 6 and FIG. 7, each of the devices may be integrated with a switching device. Therefore, it is possible to control activation or inactivation of a specific device through the switching device.

The sensor integrated haptic device in accordance with the above-described exemplary embodiments of the present disclosure can be manufactured by arranging the multi-sensor 100 together with the actuator 200 in a single cell on a display panel. Therefore, it is possible to reduce a thickness of a panel also possible to facilitate implementation of detailed sensing and tactile sensation. Further, it is possible to reduce cost due to a simple process. Accordingly, the sensor integrated haptic device can be favorably applied to various fields.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiments.

## Claims

1. A sensor integrated haptic device, comprising:
a sensor (100) and an actuator (200),
wherein the sensor (100) is arranged to be adjacent to at least a part of the actuator (200) or surround a circumference of the actuator (200),
the actuator (200) is formed to be arranged on a same plane as the sensor (100), wherein the sensor (100) and the actuator (200) include: sacrificial layers (120, 120a) formed in a predetermined sensor (100) region and a predetermined actuator (200) region, respectively,
on a substrate (110), a lower electrode (130) of the sensor (100) formed, through a first process, on an upper surface of the sacrificial layer (120) formed in the predetermined sensor (100) region and a lower electrode (210) of the actuator (200) formed, through said first process, on a region of an upper surface of the substrate (110) adjacent to the sacrificial layer formed in the predetermined actuator (200) region and on an upper surface of the sacrificial layer (120a) formed in the predetermined actuator (200) region,
the predetermined sensor (100) region arranged to be adjacent to at least a part of the predetermined actuator (200) region or surrounding a circumference of the actuator (200), ionic elastomer layers (140, 230) stacked, through a second process, on the lower electrodes (130, 210) respectively, and upper electrodes (150, 240) formed, through a third process, on the ionic elastomer layers (140, 230) respectively,
wherein after the formation of the upper electrodes (150, 240), the sacrificial layer (120a) is removed from the predetermined actuator (200) region by selective etching, wherein and such that the lower electrode (210) of the actuator (200) has a cantilever shape supported by one self-supporting post anchored on the substrate (110) or a bridge shape supported by two self-supporting posts anchored on the substrate (110).

2. The sensor integrated haptic device of Claim 1, further comprising:
a first line (201) connected to the upper electrode (240) of the actuator (200); and
a second line (202) connected to the lower electrode (210) of the actuator (200),
wherein the sensor (100) is configured to surround a circumference of the actuator (200) and includes an outlet that enables the first line (201) and the second line (202) to be withdrawn to the outside of the sensor (100).

3. The sensor integrated haptic device of Claim 1, further comprising: an anti-contamination film (160) on an upper surface of the sensor (100) and an upper surface of the actuator (200).

4. The sensor integrated haptic device of Claim 1,
wherein the lower electrode (130) of the sensor (100) surrounds the sacrificial layer (120) of the sensor (100).

5. The sensor integrated haptic device of Claim 4, further comprising: a control unit configured to detect a capacitance formed between the lower electrode (130) and the upper electrode (150) of the sensor (100) and sense an external pressure based on the capacitance.

6. The sensor integrated haptic device of Claim 1,
wherein the actuator (200) further includes an insulation layer (220) in contact with a predetermined region of the lower electrode (210) of the actuator (200), the ionic elastomer layer (230) of the actuator (200) is in contact with the insulation layer (220) and formed on an upper surface of the lower electrode (210) of the actuator (200), the upper electrode (240) of the actuator (200) is formed on an upper surface of the ionic elastomer layer (230) of the actuator (200) and an upper surface of the insulation layer (220), the predetermined region of the lower electrode (210) of the actuator (200) is arranged to be apart from the plane as much as a thickness of the sacrificial layer (120a) of the actuator (200) by the sacrificial layer (120a) of the actuator (200).

7. The sensor integrated haptic device of Claim 1,
wherein the sensor (100) senses at least one of pressure, temperature, and pressure to tactile.

8. The sensor integrated haptic device of Claim 1,
wherein the actuator (200) is formed of at least one of piezoceramic, a shape memory alloy, an electroactive polymer, an ionic polymer metal composite, and a dielectric polymer.

9. A method for manufacturing a sensor integrated haptic device, the sensor integrated haptic device comprising a sensor (100) and an actuator (200), wherein the sensor (100) is arranged to be adjacent to at least a part of the actuator (200) or surround a circumference of the actuator (200) and wherein the actuator is formed to be arranged on a same plane as the sensor (100), said method comprising:
forming sacrificial layers (120, 120a) in a predetermined sensor (100) region and
a predetermined actuator (200) region on a substrate (110), respectively, wherein the predetermined sensor (100) region is arranged to be adjacent to at least a part of the predetermined actuator (200) region or to surround a circumference of the actuator (200);
forming, by a first process, a lower electrode (130) of the sensor (100) on an upper surface of the sacrificial layer (120) formed in the predetermined sensor (100) region and a lower electrode (210) of the actuator (200) on a region of an upper surface of the substrate (110) adjacent to the sacrificial layer (120a) formed in the predetermined actuator (200) region and on an upper surface of the sacrificial layer (120a) formed in the predetermined actuator (200) region;
stacking, by a second process, ionic elastomer layers (140, 230) on the lower electrodes (130, 210) respectively;
forming, by a third process, upper electrodes (150, 240) on the ionic elastomer layers (140, 230) respectively; and
removing the sacrificial layer (120a) from the predetermined actuator (200) region after the step of forming upper electrodes (150, 240) by selective etching, wherein and so that the lower electrode (210) of the actuator (200) has a cantilever shape supported by one self-supporting post anchored on the substrate (110) or a bridge shape supported by two self-supporting posts anchored on the substrate (110).

10. The method for manufacturing a sensor integrated haptic device of Claim 9, wherein the step of forming lower electrodes (130, 210) includes:
forming an electrode contact integrated with the lower electrode (210) of the actuator (200), and the step of forming upper electrodes (150, 240) further includes: forming an electrode contact integrated with the upper electrode (240) of the actuator (200).

11. The method for manufacturing a sensor integrated haptic device of Claim 9, wherein the step of stacking ionic elastomer layers (140, 230) on the lower electrodes (130, 210) respectively, includes:
stacking an ionic elastomer (50) on upper surfaces of the substrate (110), the lower electrode (130) of the sensor (100), and the lower electrode (210) of the actuator (200); and
removing the ionic elastomer (50) except the ionic elastomer (50) positioned on the upper surface of the lower electrode (130) of the sensor (100) and the upper surface of the lower electrode (210) of the actuator (200).

## Patentansprüche

1. Sensorintegrierte haptische Vorrichtung, umfassend:
einen Sensor (100) und einen Aktor (200),
wobei der Sensor (100) so angeordnet ist, dass er zu mindestens einem Teil des Aktors (200) benachbart ist oder einen Umfang des Aktors (200) umgibt,
wobei der Aktor (200) so ausgebildet ist, dass er in einer gleichen Ebene wie der Sensor (100) angeordnet ist, wobei der Sensor (100) und der Aktor (200) umfassen:
Opferschichten (120, 120a), die in einem vorbestimmten Sensorbereich (100) und einem vorbestimmten Aktorbereich (200) auf einem Substrat (110) ausgebildet sind,
eine untere Elektrode (130) des Sensors (100), die durch einen ersten Prozess auf einer oberen Fläche der Opferschicht (120) gebildet ist, die in dem vorbestimmten Sensorbereich (100) gebildet ist, und eine untere Elektrode (210) des Aktors (200), die durch den ersten Prozess auf einem Bereich einer oberen Fläche des Substrats (110) benachbart zu der Opferschicht, die in dem vorbestimmten Aktorbereich (200) gebildet ist, und auf einer oberen Fläche der Opferschicht (120a), die in dem vorbestimmten Aktorbereich (200) gebildet ist, gebildet ist, wobei der vorbestimmte Sensorbereich (100) so angeordnet ist, dass er zu mindestens einem Teil des vorbestimmten Aktorbereichs (200) benachbart ist oder einen Umfang des Aktors (200) umgibt,
ionische elastomere Schichten (140, 230), die durch einen zweiten Prozess jeweils auf die unteren Elektroden (130, 210) gestapelt sind, und obere Elektroden (150, 240), die durch einen dritten Prozess jeweils auf den ionischen elastomeren Schichten (140, 230) gebildet sind, wobei nach der Bildung der oberen Elektroden (150, 240) die Opferschicht (120a) von dem vorbestimmten Aktorbereich (200) durch selektives Ätzen entfernt ist, wobei und so dass die untere Elektrode (210) des Aktors (200) eine freitragende Form, die von einem selbsttragenden Pfosten getragen ist, der auf dem Substrat (110) verankert ist, oder eine Brückenform aufweist, die von zwei selbsttragenden Pfosten getragen ist, die auf dem Substrat (110) verankert sind.

2. Sensorintegrierte haptische Vorrichtung nach Anspruch 1, ferner umfassend:
eine erste Leitung (201), die mit der oberen Elektrode (240) des Aktors (200) verbunden ist; und
eine zweite Leitung (202), die mit der unteren Elektrode (210) des Aktors (200) verbunden ist, wobei der Sensor (100) so konfiguriert ist, dass er einen Umfang des Aktors (200) umgibt und einen Auslass aufweist, der es ermöglicht, die erste Leitung (201) und die zweite Leitung (202) an die Au-βenseite des Sensors (100) zu ziehen.

3. Sensorintegrierte haptische Vorrichtung nach Anspruch 1, ferner umfassend: einen Anti-Kontaminationsfilm (160) auf einer oberen Fläche des Sensors (100) und einer oberen Fläche des Aktors (200).

4. Sensorintegrierte haptische Vorrichtung nach Anspruch 1,
wobei die untere Elektrode (130) des Sensors (100) die Opferschicht (120) des Sensors (100) umgibt.

5. Sensorintegrierte haptische Vorrichtung nach Anspruch 4, ferner umfassend: eine Steuereinheit, die so konfiguriert ist, dass sie eine zwischen der unteren Elektrode (130) und der oberen Elektrode (150) des Sensors (100) gebildete Kapazität detektiert und einen externen Druck auf der Grundlage der Kapazität erfasst.

6. Sensorintegrierte haptische Vorrichtung nach Anspruch 1,
wobei der Aktor (200) ferner eine Isolierschicht (220) in Kontakt mit einem vorbestimmten Bereich der unteren Elektrode (210) des Aktors (200) aufweist,
die ionische elastomere Schicht (230) des Aktors (200) in Kontakt mit der Isolierschicht (220) steht und auf einer oberen Fläche der unteren Elektrode (210) des Aktors (200) ausgebildet ist, die obere Elektrode (240) des Aktors (200) auf einer oberen Fläche der ionischen elastomeren Schicht (230) des Aktors (200) und einer oberen Fläche der Isolierschicht (220) ausgebildet ist,
der vorbestimmte Bereich der unteren Elektrode (210) des Aktors (200) so angeordnet ist, dass er von der Ebene so weit wie eine Dicke der Opferschicht (120a) des Aktors (200) durch die Opferschicht (120a) des Aktors (200) entfernt ist.

7. Sensorintegrierte haptische Vorrichtung nach Anspruch 1,
wobei der Sensor (100) zumindest eines aus Druck, Temperatur und taktilem Druck erfasst.

8. Sensorintegrierte haptische Vorrichtung nach Anspruch 1, wobei der Aktor (200) aus mindestens einem von Piezokeramik, einer Formgedächtnislegierung, einem elektroaktiven Polymer, einem ionischen Polymer-Metall-Verbundstoff und einem dielektrischen Polymer gebildet ist.

9. Verfahren zum Herstellen einer sensorintegrierten haptischen Vorrichtung,
wobei die sensorintegrierte haptische Vorrichtung einen Sensor (100) und einen Aktor (200) umfasst, wobei der Sensor (100) so angeordnet ist, dass er zu mindestens einem Teil des Aktors (200) benachbart ist oder einen Umfang des Aktors (200) umgibt, und wobei der Aktor so ausgebildet ist, dass er in derselben Ebene wie der Sensor (100) angeordnet ist, wobei das Verfahren umfasst;
Ausbilden von Opferschichten (120, 120a) in einem vorbestimmten Sensorbereich (100) und einem vorbestimmten Aktorbereich (200) auf einem Substrat (110),
wobei der vorbestimmte Sensorbereich (100) so angeordnet ist, dass er zu mindestens einem Teil des vorbestimmten Aktorbereichs (200) benachbart ist oder einen Umfang des Aktors (200) umgibt;
Ausbilden einer unteren Elektrode (130) des Sensors (100) durch einen ersten Prozess an einer oberen Fläche der Opferschicht (120), die in dem vorbestimmten Sensorbereich (100) gebildet ist, und einer unteren Elektrode (210) des Aktors (200) an einem Bereich einer oberen Fläche des Substrats (110) benachbart der Opferschicht (120a), die in dem vorbestimmten Aktorbereich (200) gebildet ist, und an einer oberen Fläche der Opferschicht (120a), die in dem vorbestimmten Aktorbereich (200) gebildet ist;
Stapeln ionischer elastomerer Schichten (140, 230) durch einen zweiten Prozess an den unteren Elektroden (130, 210);
Ausbilden oberer Elektroden (150, 240) durch einen dritten Prozess an den ionischen elastomeren Schichten (140, 230); und
Entfernen der Opferschicht (120a) von dem vorbestimmten Aktorbereich (200) nach dem Schritt zum Formen der oberen Elektroden (150, 240) durch selektives Ätzen, wobei und so dass die untere Elektrode (210) des Aktors (200) eine freitragende Form, die von einem selbsttragenden Pfosten getragen ist, der auf dem Substrat (110) verankert ist, oder eine Brückenform aufweist, die von zwei selbsttragenden Pfosten getragen ist, die auf dem Substrat (110) verankert sind.

10. Verfahren zur Herstellung einer sensorintegrierten haptischen Vorrichtung nach Anspruch 9, wobei der Schritt zum Ausbilden der unteren Elektroden (130, 210) umfasst:
Ausbilden eines Elektrodenkontakts, der mit der unteren Elektrode (210) des Aktors (200) integriert ist, und wobei der Schritt zum Ausbilden oberer Elektroden (150, 240) ferner umfasst: Ausbilden eines Elektrodenkontakts, der mit der oberen Elektrode (240) des Aktors (200) integriert ist.

11. Verfahren zur Herstellung einer sensorintegrierten haptischen Vorrichtung nach Anspruch 9, wobei der Schritt zum Stapeln ionischer elastomerer Schichten (140, 230) auf den unteren Elektroden (130, 210) umfasst:
Stapeln eines ionischen Elastomers (50) auf den oberen Flächen des Substrats (110), der unteren Elektrode (130) des Sensors (100) und der unteren Elektrode (210) des Aktors (200); und
Entfernen des ionischen Elastomers (50) mit Ausnahme des ionischen Elastomers (50), das sich auf der oberen Fläche der unteren Elektrode (130) des Sensors (100) und der oberen Fläche der unteren Elektrode (210) des Aktors (200) befindet.

## Revendications

1. Dispositif haptique intégré de capteur, comprenant :
un capteur (100) et un actionneur (200),
dans lequel le capteur (100) est agencé pour être adjacent à au moins une partie de l'actionneur (200) ou pour entourer une circonférence de l'actionneur (200),
l'actionneur (200) est formé pour être agencé sur un même plan que le capteur (100),
dans lequel le capteur (100) et l'actionneur (200) incluent :
des couches sacrificielles (120, 120a) formées dans une région de capteur (100) prédéterminée et une région d'actionneur (200) prédéterminée, respectivement, sur un substrat (110),
une électrode inférieure (130) du capteur (100) formée, via un premier processus, sur une surface supérieure de la couche sacrificielle (120) formée dans la région de capteur (100) prédéterminée, et une électrode inférieure (210) de l'actionneur (200) formée, via ledit premier processus, sur une région d'une surface supérieure du substrat (110) adjacente à la couche sacrificielle formée dans la région d'actionneur (200) prédéterminée et sur une surface supérieure de la couche sacrificielle (120a) formée dans la région d'actionneur (200) prédéterminée,
la région de capteur (100) prédéterminée étant agencée pour être adjacente à ladite au moins une partie de la région d'actionneur (200) prédéterminée ou entourant une circonférence de l'actionneur (200),
des couches élastomère ioniques (140, 230) empilées via un deuxième processus, sur les électrodes inférieures (130, 210) respectivement, et
des électrodes supérieures (150, 240) formées, via un troisième processus, sur les couches élastomère ioniques (140, 230) respectivement,
dans lequel, après la formation des électrodes supérieures (150, 240), la couche sacrificielle (120a) est enlevée de la région d'actionneur (200) prédéterminée par attaque chimique sélective, dans lequel et de sorte que l'électrode inférieure (210) de l'actionneur (200) a une forme en saillie supportée par un plot autoporteur ancré sur le substrat (110) ou une forme en pont supportée par deux plots autoporteurs ancrés sur le substrat (110).

2. Dispositif haptique intégré de capteur selon la revendication 1, comprenant en outre :
une première ligne (201) connectée à l'électrode supérieure (240) de l'actionneur (200) ; et
une seconde ligne (202) connectée à l'électrode inférieure (210) de l'actionneur (200),
dans lequel le capteur (100) est configuré pour entourer une circonférence de l'actionneur (200) et inclut une sortie qui permet à la première ligne (201) et à la seconde ligne (202) d'être retirées vers l'extérieur du capteur (100).

3. Dispositif haptique intégré de capteur selon la revendication 1, comprenant en outre : un film anti-contamination (160) sur une surface supérieure du capteur (100) et sur une surface supérieure de l'actionneur (200).

4. Dispositif haptique intégré de capteur selon la revendication 1,
dans lequel l'électrode inférieure (130) du capteur (100) entoure la couche sacrificielle (120) du capteur (100).

5. Dispositif haptique intégré de capteur selon la revendication 4, comprenant en outre : une unité de commande configurée pour détecter une capacité formée entre l'électrode inférieure (130) et l'électrode supérieure (150) du capteur (100) et pour capter une pression externe sur la base de la capacité.

6. Dispositif haptique intégré de capteur selon la revendication 1,
dans lequel l'actionneur (200) inclut en outre une couche d'isolation (220) en contact avec une région prédéterminée de l'électrode inférieure (210) de l'actionneur (200),
la couche élastomère ionique (230) de l'actionneur (200) est en contact avec la couche d'isolation (220) et est formée sur une surface supérieure de l'électrode inférieure (210) de l'actionneur (200),
l'électrode supérieure (240) de l'actionneur (200) est formée sur une surface supérieure de la couche élastomère ionique (230) de l'actionneur (200) et sur une surface supérieure de la couche d'isolation (220),
la région prédéterminée de l'électrode inférieure (210) de l'actionneur (200) est agencée pour être à distance du plan autant qu'une épaisseur de la couche sacrificielle (120a) de l'actionneur (200) par la couche sacrificielle (120a) de l'actionneur (200).

7. Dispositif haptique intégré de capteur selon la revendication 1,
dans lequel le capteur (100) capte au moins un paramètre parmi une pression, une température et une pression au tactile.

8. Dispositif haptique intégré de capteur selon la revendication 1,
dans lequel l'actionneur (200) est forme d'au moins un élément parmi :
piézocéramique, alliage à mémoire de forme, polymère électroactif, composite de métal polymère ionique, et polymère diélectrique.

9. Procédé de fabrication d'un dispositif haptique intégré de capteur, le dispositif haptique intégré de capteur, comprenant un capteur (100) et un actionneur (200), dans lequel le capteur (100) est agencé pour être adjacent à au moins une partie de l'actionneur (200) ou pour entourer une circonférence de l'actionneur (200) et dans lequel l'actionneur est formé pour être agencé sur un même plan que le capteur (100), ledit procédé comprenant les étapes consistant à :
former des couches sacrificielles (120, 120a) dans une région de capteur (100) prédéterminée et dans une région d'actionneur (200) prédéterminée sur un substrat (110), respectivement,
dans lequel la région de capteur (100) prédéterminée est agencée pour être adjacente à au moins une partie de la région d'actionneur (200) prédéterminée ou pour entourer une circonférence de l'actionneur (200) ;
former, via un premier processus, une électrode inférieure (130) du capteur (100) sur une surface supérieure de la couche sacrificielle (120) formée dans la région de capteur (100) prédéterminée et une électrode inférieure (210) de l'actionneur (200) sur une région d'une surface supérieure du substrat (110) adjacente à la couche sacrificielle (120a) formée dans la région d'actionneur (200) prédéterminée et sur une surface supérieure de la couche sacrificielle (120a) formée dans la région d'actionneur (200) prédéterminée ;
empiler, via un deuxième processus, des couches élastomère ioniques (140, 230) sur les électrodes inférieures (130, 210) respectivement ;
former, via un troisième processus, des électrodes supérieures (150, 240) sur les couches élastomère ioniques (140, 230) respectivement ; et
enlever la couche sacrificielle (120a) de la région d'actionneur (200) prédéterminée après l'étape consistant à former les électrodes supérieures (150, 240) par attaque chimique sélective,
dans lequel et de sorte que l'électrode inférieure (210) de l'actionneur (200) a une forme en saillie supportée par un plot autoporteur ancré sur le substrat (110) ou une forme en pont supportée par deux plots autoporteurs ancrés sur le substrat (110).

10. Procédé de fabrication d'un dispositif haptique intégré de capteur selon la revendication 9,
dans lequel l'étape consistant à former les électrodes inférieures (130, 210) inclut de former un contact d'électrode intégré à l'électrode inférieure (210) de l'actionneur (200), et l'étape consistant à former les électrodes supérieures (150, 240) inclut en outre de former un contact d'électrode intégré à l'électrode supérieure (240) de l'actionneur (200).

11. Procédé de fabrication d'un dispositif haptique intégré de capteur selon la revendication 9,
dans lequel l'étape consistant à empiler des couches élastomère ioniques (140, 230) sur les électrodes inférieures (130, 210), respectivement, inclut les opérations consistant à :
empiler un élastomère ionique (50) sur des surfaces supérieures du substrat (110), sur l'électrode inférieure (130) du capteur (100) et sur l'électrode inférieure (210) de l'actionneur (200) ; et
enlever l'élastomère ionique (50) à l'exception de l'élastomère ionique (50) positionné sur la surface supérieure de l'électrode inférieure (130) du capteur (100) et sur la surface supérieure de l'électrode inférieure (210) de l'actionneur (200).
